# EUROPEAN PATENT SPECIFICATION

(11) **EP 4 183 514 B1**
(45) Date of publication and mention of the grant of the patent: **06.11.2024**
(21) Application number: 20953276.1
(22) Date of filing: 10.09.2020
(51) Int. Cl.: B23K 26/067, B23K 26/21, B23K 26/06

(54) **LASER PROCESSING METHOD**
LASERBEARBEITUNGSVERFAHREN
PROCÉDÉ DE TRAITEMENT AU LASER

(43) Date of publication of application: 24.05.2023
(73) Proprietor: Primetals Technologies Japan, Ltd., Hiroshima-shi, Hiroshima 733-8553 (JP)
(72) Inventor: YAGI, Takahiro, Hiroshima-shi, Hiroshima 733-8553 (JP); KAGA, Shinichi, Hiroshima-shi, Hiroshima 733-8553 (JP); WATANABE, Yujiro, Tokyo 100-8332 (JP); OKUDA, Takehisa, Tokyo 100-8332 (JP)
(74) Representative: Strehl Schübel-Hopf & Partner
(86) International application number: PCT/JP2020/034367
(87) International publication number: WO 2022/054211

(56) References cited:
- WO-A1-2020/050379
- CN-A- 103 056 523
- CN-A- 103 774 137
- JP-A- 2000 271 773
- JP-A- 2000 271 773
- JP-A- 2002 219 590
- JP-A- 2002 219 590
- JP-A- 2003 290 952
- JP-A- 2013 052 445
- JP-A- 2013 052 445
- JP-U- S63 116 194
- US-A1- 2005 194 363

## Description

### TECHNICAL FIELD

The present disclosure relates to a laser processing method.

### BACKGROUND

It is known to process a workpiece such as metal using a laser spot formed by focusing laser beam.

Patent Document 1 discloses a method according to the preamble of claim 1, wherein three focused spots are formed from laser beam from a single optical fiber, and these three focused spots are used to weld a metal material (workpiece). Further, Patent Document 1 describes that in order to suppress defect generation due to rapid heating and cooling by the laser spots in welding the metal material, preheating is performed by the first focused spot of the three, main processing is performed by the next focused spot, and slow cooling is performed by the last focused spot.
Further related methods are disclosed in JP 2013 052445 A, JP 2002 219590 A, CN 103 056 523 A and US 2005/194363 A1-

### Citation List

### Patent Literature

Patent Document 1: JP2000-271773A

### SUMMARY

### Problems to be Solved

A laser processing apparatus such as a laser welding apparatus used in steel manufacturing lines or the like is required to improve processing speed while maintaining processing quality. However, in laser spot processing, it is difficult to improve processing speed while maintaining processing quality. For example, when the energy density in a laser spot is increased to improve the processing speed, a thin and deep keyhole is formed in the workpiece. In this case, the distance between the keyhole and the solid-liquid interface in the workpiece becomes narrow, and metal vapor is likely to be suddenly emitted from the narrow molten pool, which is thought to increase the molten metal scattering (spatter) (i.e., processing quality is degraded).

In view of the above, an object of at least one embodiment of the present invention is to provide a laser processing method whereby it is possible to improve processing speed while suppressing a decrease in processing quality.

### Solution to the Problems

The invention proposes to solve the above problems by providing a method according to claim 1, the method comprising a step of processing a workpiece by relatively moving the workpiece with respect to a plurality of laser spots including a first spot, a second spot, and a third spot which are linearly arranged so that the first spot, the second spot, and the third spot pass through a processing target portion of the workpiece in this order. To a total amount of energy of laser beam in the first spot, the second spot, and the third spot, a ratio of energy in the first spot is not less than 20% and not more than 30%, a ratio of energy in the second spot is not less than 20% and not more than 30%, and a ratio of energy in the third spot is not less than 45% and not more than 55%.

Further embodiments of the present invention are defined in the dependent claims.

### Advantageous Effects

The present invention provides a laser processing method whereby it is possible to improve processing speed while suppressing a decrease in processing quality.

### BRIEF DESCRIPTION OF DRAWINGS

FIG. 1 is a schematic diagram of an example of a laser processing apparatus for executing a laser processing method according to some embodiments.
FIG. 2 is a schematic diagram of a processing target portion of a workpiece when viewed from the irradiation direction of laser beam.
FIG. 3A is a schematic diagram of a processing target portion of a workpiece in the process of executing a laser processing method according to an embodiment.
FIG. 3B is a schematic diagram of a processing target portion of a workpiece in the process of executing a laser processing method according to an embodiment.
FIG. 4 is a schematic diagram of an example of a laser processing apparatus for executing a laser processing method according to some embodiments.
FIG. 5 is a schematic diagram of an example of a laser processing apparatus for executing a laser processing method according to some embodiments.
FIG. 6 is a schematic diagram of an example of a laser processing apparatus for executing a laser processing method according to some embodiments.

### DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

### (Configuration of laser processing apparatus)

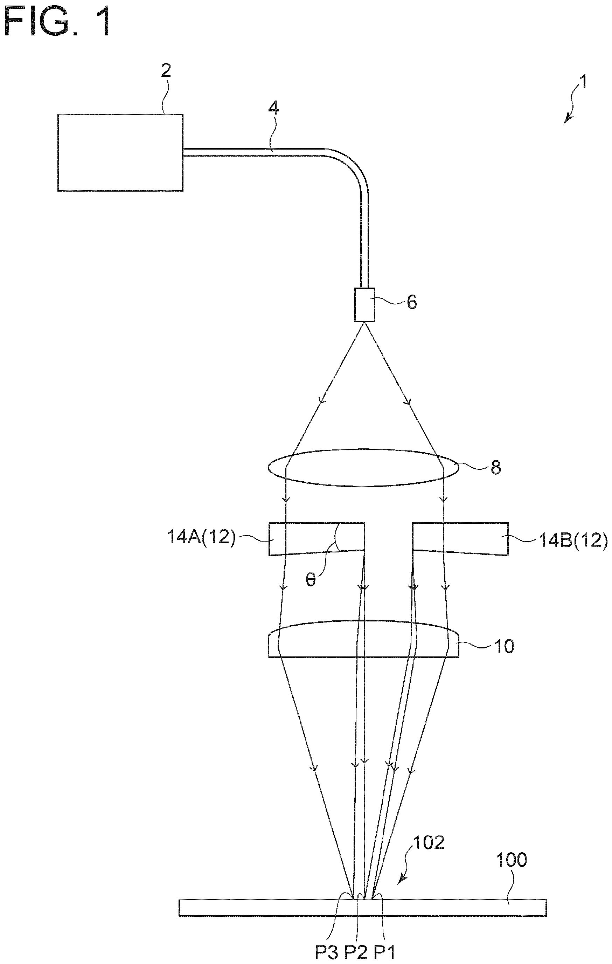

First, a laser processing apparatus for executing a laser processing method according to some embodiments will be described. FIGs. 1 and 4 to 6 are each a schematic diagram of an example of a laser processing apparatus for executing a laser processing method according to some embodiments. As illustrated in the figures, a laser processing apparatus 1 according to an embodiment includes a laser oscillator 2, an optical fiber 4, a laser emission part 6, a collimating optics 8, and a focusing optics 10. The laser emission part 6, the collimating optics 8, and the focusing optics 10 constitute a processing head, which is accommodated in a housing (not shown) and supported by the housing.

The laser oscillator 2 may be, for example, a fiber laser oscillator using the optical fiber 4 as a medium. In the case of the fiber laser oscillator, laser beam having a wavelength of 1,070 nm to 1,080 nm is obtained. The laser beam generated by the laser oscillator 2 is transmitted to the optical fiber 4. The laser oscillator 2 is not limited to the fiber laser oscillator. In some embodiments, the laser oscillator 2 may be, for example, a CO2 laser oscillator, a YAG laser oscillator, or the like.

The optical fiber 4 is connected at one end to the laser oscillator 2 and at the other end to the laser emission part 6. The optical fiber 4 is configured to transmit the laser beam from the laser oscillator 2 to the laser emission part 6.

The laser emission part 6 is configured to emit the laser beam from the optical fiber 4 toward the workpiece 100. The collimating optics 8 is configured to collimate the laser beam emitted from the laser emission part 6 with a spread angle, that is, to form a collimated laser beam. The collimating optics 8 may include a collimating lens. The focusing optics 10 is configured to collect the laser beam (collimated laser beam) having passed through the collimating optics 8. The focusing optics 10 may include a focusing lens.

The laser processing apparatus 1 irradiates a processing target portion 102 of a workpiece 100 with the laser beam collected by the focusing optics 10 to have a high energy density, thereby processing the workpiece 100 (for example, welding or the like). In processing the workpiece 100, the processing position of the workpiece 100 by laser irradiation from the laser processing head (i.e., laser irradiation position) may be moved by relatively moving the workpiece 100 with respect to the laser processing head. The workpiece 100 may be a metal material such as an alloy.

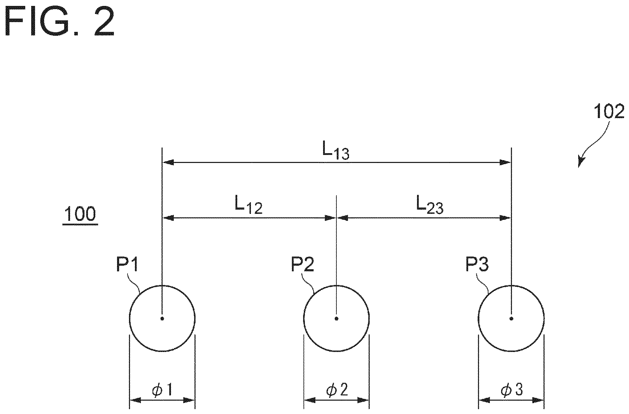

The laser processing apparatus 1 is configured to form a plurality of laser spots (laser focused spots by the focusing optics 10) including a first spot P1, a second spot P2, and a third spot P3 which are arranged linearly. As shown in FIGs. 1 and 4 to 6, the laser processing apparatus 1 may be configured to form three laser spots P1 to P3 (see FIG. 2). FIG. 2 is a schematic diagram of the processing target portion 102 of the workpiece 100 when viewed from the irradiation direction of laser beam from the laser emission part 6.

In the exemplary embodiments shown in FIGs. 1, 4, and 5, the laser processing apparatus 1 includes a laser splitting part 12 for splitting laser beam emitted from one laser emission part 6 into three beams. The laser splitting part 12 shown in FIGs. 1, 4 and 5 is disposed between the collimating optics 8 and the focusing optics 10, and is configured to split the collimated laser beam from the collimating optics 8 into three beams and guide them to the focusing optics 10.

In the exemplary embodiment shown in FIG. 1, the laser splitting part 12 includes two tilting prisms 14A, 14B spaced apart from each other within the cross-section of the laser beam from the collimating optics 8. The positions of the two tilting prisms 14A, 14B within the cross-section of the laser beam are adjustable. In this case, the ratio of energy (distribution of energy) of laser beam in the three laser spots P1 to P3 is determined by the amount of insertion of the two tilting prisms 14A, 14B within the cross-section of the laser beam. Further, the distances between the spot centers of the three laser spots P1 to P3 are determined by wedge angles θ (see FIG. 1) of the two tilting prisms 14A, 14B. In FIG. 1, the wedge angles θ of the tilting prisms 14A, 14B are an acute angle, but the wedge angles θ of the tilting prisms 14A, 14B may be an obtuse angle.

The diameters (spot diameters) ϕ1 to ϕ3 of the laser spots P1 to P3 are determined by the core diameter ϕ_{fiber} of the optical fiber 4 and optical magnification M. Here, the optical magnification M is a ratio M = F_{f}/F_{c} of the focal length (Ff) of the focusing optics 10 to the focal length (F_{c}) of the collimating optics 8. In other words, the spot diameters can be adjusted by changing the core diameter ϕ_{fiber} of the optical fiber, the focal length (Ff) of the focusing optics 10, the focal length (F_{c}) of the collimating optics 8, or the optical magnification M.

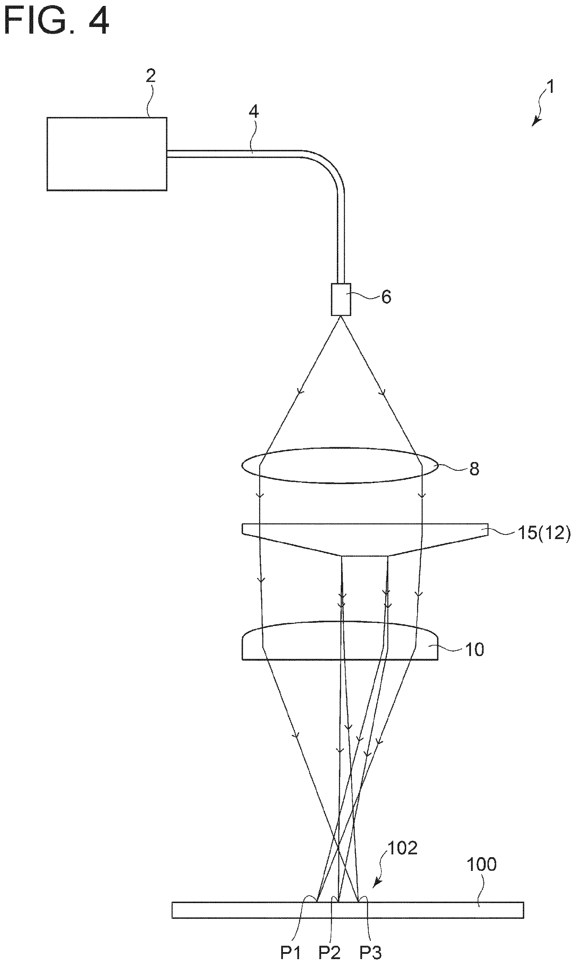

In the exemplary embodiment shown in FIG. 4, the laser splitting part 12 includes one polygonal prism 15 disposed within the region of passage of the laser beam from the collimating optics 8. The position of the polygonal prism 15 within the cross-section of the laser beam is adjustable. In this case, the ratio of energy (distribution of energy) of laser beam in the three laser spots P1 to P3 is determined by the position of the polygonal prism 15 within the cross-section of the laser beam. Further, the distances between the spot centers of the three laser spots P1 to P3 are determined by wedge angle θ of the polygonal prism 15.

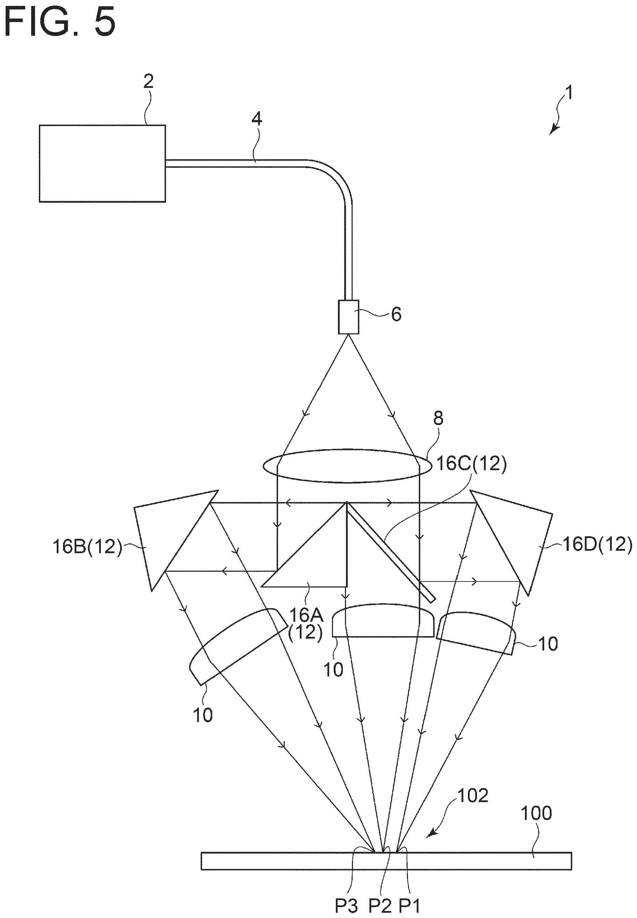

In the exemplary embodiment shown in FIG. 5, the laser splitting part 12 includes mirrors 16A to 16D disposed to reflect at least a portion of the laser beam from the collimating optics 8. The mirror 16C in FIG. 5 is a half-mirror which reflects a portion of the laser beam and transmits a portion of the laser beam. Further, the focusing optics 10 includes three focusing lenses for respectively collecting the three laser beams split by the mirrors 16A to 16D. In this case, the ratio of energy (distribution of energy) of laser beam in the three laser spots P1 to P3 and the distances between the spot centers of the three laser spots P1 to P3 are determined by the installation positions and installation angles of the mirrors 16A to 16D.

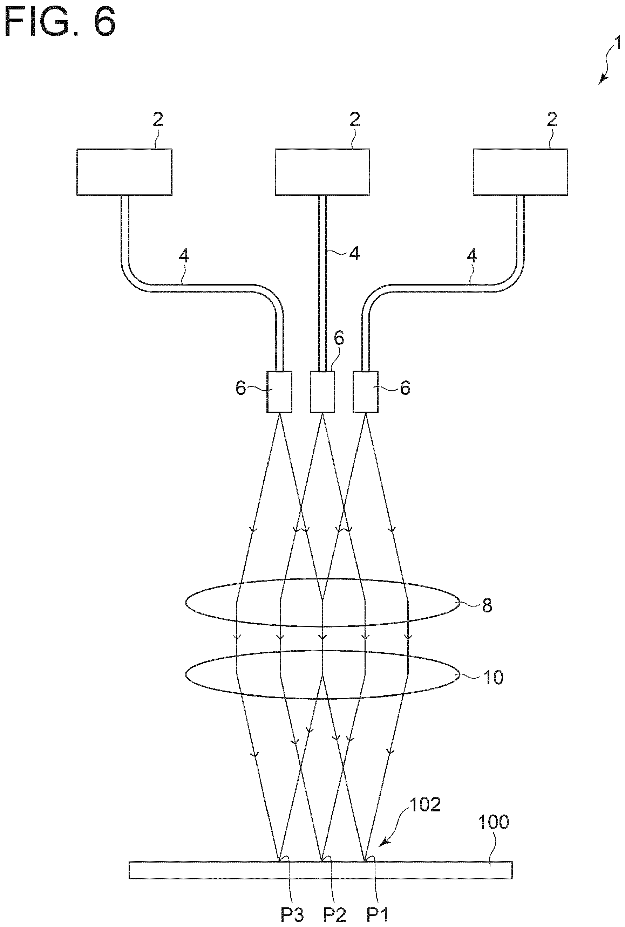

In the exemplary embodiment shown in FIG. 6, three laser spots P1 to P3 are formed from laser beams emitted from three laser emission parts 6. That is, the laser processing apparatus 1 shown in FIG. 6 includes three laser oscillators 2, and laser beams oscillated from these laser oscillators 2 are transmitted through respective optical fibers 4 and emitted from the laser emission parts 6. The three laser beams emitted from the three laser emission parts 6 are collimated by the collimating optics 8 (collimating lens) and collected by the focusing optics 10 (focusing lens) to form three laser spots P1 to P3, respectively. The collimating optics 8 may include three collimating lenses corresponding to three laser emission parts 6, respectively. Further, the focusing optics 10 may include three focusing lenses corresponding to the three laser emission parts 6, respectively. In the case of the embodiment shown in FIG. 6, the ratio of energy (distribution of energy) of laser beam in the three laser spots P1 to P3 is determined by the outputs of the three laser oscillators 2. Further, the distances between the spot centers of the three laser spots P1 to P3 are determined by the arrangement of the laser emission parts 6 and the focusing optics 10.

### (Laser processing method)

Next, the laser processing method according to some embodiments will be described. The laser processing method according to some embodiments can be performed by the above-described laser processing apparatus 1, for example. However, the laser processing method according to some embodiments may be performed by using another laser processing apparatus.

In some embodiments, a workpiece 100 is processed by relatively moving the workpiece 100 with respect to laser spots P1 to P3 which are linearly arranged so that the first spot P1, the second spot P2, and the third spot P3 pass through a processing target portion 102 of the workpiece 100 in this order (processing step). Here, to a total amount (100%) of energy of laser beam in the first spot P1, the second spot P2, and the third spot P3, a ratio E1 of energy in the first spot P1 is not less than 20% and not more than 30%, a ratio E2 of energy in the second spot P2 is not less than 20% and not more than 30%, and a ratio E3 of energy in the third spot P3 is not less than 45% and not more than 55%.

Prior to processing the workpiece 100 as described above, the laser processing apparatus 1 is adjusted so that the energy ratios of the first spot P1 to the third spot P3 are within the above ranges.

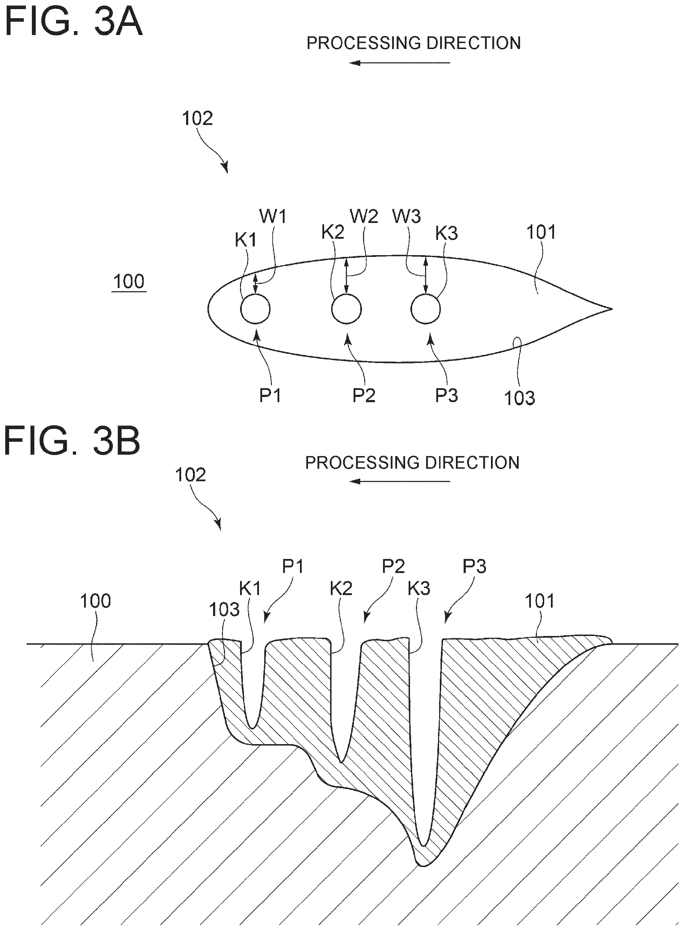

Here, FIGs. 3A and 3B are each a schematic diagram of the processing target portion 102 of the workpiece 100 in the process of executing the laser processing method according to the above-described embodiments. FIG. 3A is a schematic diagram of the processing target portion 102 of the workpiece 100 when viewed from the irradiation direction of laser beam from the laser emission part 6. FIG. 3B is a schematic cross-sectional view of the workpiece 100.

Generally, in laser spot processing, it is difficult to improve processing speed while maintaining processing quality. For example, when the energy density in a laser spot is increased to improve the processing speed, a thin and deep keyhole is formed in the workpiece. In this case, the distance between the keyhole and the solid-liquid interface in the workpiece becomes narrow, and metal vapor is likely to be suddenly emitted from the narrow molten pool, which is thought to increase the molten metal scattering (spatter) (i.e., processing quality is degraded).

In this regard, in the above-described embodiment, the energy densities of the first to third spots P1 to P3 are relatively low in the first spot P1 and the second spot P2, and relatively high in the third spot P3. Accordingly, as shown in FIGs. 3A and 3B, the processing target portion 102 is first irradiated with the laser beam in the first spot P1, whereby a shallow keyhole K1 and a molten pool 101 are formed in the processing target portion 102 of the workpiece 100. When the keyhole is shallow, spatter is unlikely to occur. Then, the molten pool 101 formed by the first spot P1 is irradiated with the laser beam in the second spot P2 to form a shallow keyhole K2, with the distance between the keyhole K2 and a solid-liquid interface 103 (interface between the molten pool 101 and base metal) expanded. In other words, as shown in FIG. 2A, the distance W2 from the side (side in the direction orthogonal to the processing direction) of the keyhole K2 formed by the second spot P2 to the solid-liquid interface 103 is larger than the distance W1 from the side of the keyhole K1 formed by the first spot P1 to the solid-liquid interface 103. Then, the relatively shallow and wide molten pool 101 formed as described above is irradiated with the laser beam in the third spot P3 having a high energy density to form a relatively deep keyhole K3. The distance W3 from the side of the keyhole K3 formed by the third spot P3 to the solid-liquid interface 103 is considered to be equal to or larger than the distance W2.

Thus, in the above-described embodiment, the deep keyhole K3 is formed by the third spot P3 having a relatively large energy density while the shallow and wide molten pool 101 is formed in the processing target portion 102 of the workpiece 100 by the first spot P1 and second spot P2 having a relatively small energy density, so that the distance between the deep keyhole K3 and the solid-liquid interface 103 can be ensured to a large extent. That is, it is possible to effectively suppress the generation of spatter when the workpiece 100 is irradiated with the laser spot (third spot P3) having a high energy density. Therefore, according to the above-described embodiment, it is possible to improve processing speed while suppressing a decrease in processing quality.

In some embodiments, the ratio E1 of energy in the first spot P1 is larger than the ratio E2 of energy in the second spot P2.

In the above-described embodiment, the energy densities of the first spot P1 and the second spot P2 are relatively high in the first spot P1, and relatively low in the second spot P2. Accordingly, the first spot P1, which has a relatively high energy density, first passes through the unheated processing target portion (workpiece) to quickly form the keyhole and molten pool in the processing target portion 102 of the workpiece 100. Thus, it is possible to more effectively improve processing speed.

In some embodiments, the diameter (spot diameter) ϕ1 of the first spot P1, the diameter ϕ2 of the second spot P2, and the diameter ϕ3 of the third spot P3 are each not less than 0.25 mm and not more than 0.4 mm.

In the above-described embodiment, since the diameters ϕ1 to ϕ3 of the first to third spots P1 to P3 are not less than 0.25 mm, the workpiece 100 can be effectively heated in each of the laser spots P1 to P3, and a melting amount of base metal necessary for processing the workpiece 100 can be easily obtained. Further, in the above-described embodiment, since the diameters ϕ1 to ϕ3 of the first to third spots P1 to P3 are not more than 0.4 mm, an increase in spatter due to a large spot diameter can be effectively suppressed. Therefore, according to the above-described embodiment, it is possible to both suppress a decrease in processing quality and improve processing speed.

In some embodiments, a ratio L/ϕ_{avg} of a distance L between the centers of two adjacent laser spots of the plurality of laser spots P1 to P3 to an average spot diameter ϕ_{avg} of the two adjacent laser spots is not less than 2.5 and not more than 3.5. Specifically, the ratio of the distance L₁₂ (see FIG. 2) between the centers of adjacent first and second spots P1 and P2 to the average spot diameter ϕ_{avg} (= (ϕ1 + ϕ2)/2) of the first and second spots P1 and P2, i.e., (2 × L₁₂)/(ϕ1 + ϕ2), is not less than 2.5 and not more than 3.5. Otherwise, the ratio of the distance L₂₃ (see FIG. 2) between the centers of adjacent second and third spots P2 and P3 to the average spot diameter ϕ_{avg} (= (ϕp2 + ϕ3)/2) of the second and third spots P2 and P3, i.e., (2 × L₂₃)/(ϕ2 + ϕ3), is not less than 2.5 and not more than 3.5.

In the above-described embodiment, the ratio L/ϕ_{avg} is not less than 2.5, so the distance L between the spot centers is somewhat large relative to the average spot diameter ϕ_{avg} of the two adjacent laser spots. This prevents keyholes formed by two adjacent laser spots from merging into one apparently large keyhole. Thus, it is possible to effectively suppress the generation of spatter. Additionally, in the above-described embodiment, the ratio L/ϕ_{avg} is not more than 3.5, so the distance L between the spot centers is not too large relative to the average spot diameter ϕ_{avg} of the two adjacent laser spots. This prevents re-solidification due to cooling of the molten metal that may occur between the passage of one of the two adjacent laser spots (the first spot P1 or the second spot P2) and the arrival of the other laser spot (the second spot P2 or the third spot P3) at the processing target portion 102 of the workpiece 100, effectively increasing the melt around the keyholes formed by the laser spots. Thus, it is possible to effectively suppress the generation of spatter when forming a deep keyhole in the third spot P3.

In some embodiments, the workpiece 100 includes a pair of plate materials. The above-described processing step includes butt welding of the pair of plate materials.

With the method according to the above-described embodiment, in butt welding of the pair of plate materials with the plurality of laser spots P1 to P3, it is possible to improve processing speed while suppressing a decrease in processing quality.

In the case of butt welding between plate materials, if the diameter of the laser spot is smaller than 0.25 mm, it is difficult to obtain a melting amount of the base material sufficient to fill the gap between the plate materials. Therefore, in the case of butt welding between plate materials, setting the diameters ϕ1 to ϕ3 of the first to third spots P1 to P3 to not less than 0.25 mm makes it easier to obtain a sufficient melting amount of the base material. Thus, it is possible to effectively suppress a decrease in weld quality.

In some embodiments, a distance L₁₃ (see FIG. 2) between the centers of the first spot P1 and the third spot P3 is smaller than the thickness of the processing target portion 102 of the workpiece 100 (e.g., the thickness of the above-described plate material).

For example, when each of the diameters ϕ1 to ϕ3 of the laser spots P1 to P3 is 0.25 mm and the ratio L/ϕ_{avg} is 2.5, the thickness of the processing target portion 102 of the workpiece 100 may be not less than 1.2 mm. Alternatively, when each of the diameters ϕ1 to ϕ3 of the laser spots P1 to P3 is 0.4 mm and the ratio L/ϕ_{avg} is 3.5, the thickness of the processing target portion 102 of the workpiece 100 may be not less than 2.8 mm.

According to the above-described embodiment, in processing with the plurality of laser spots P1 to P3 formed in a relatively small region having a smaller length than the thickness of the processing target portion 102 of the workpiece 100, as described above, it is possible to improve processing speed while suppressing a decrease in processing quality.

In some embodiments, the above-described processing step includes, in each of the first spot P1 and the second spot P2, forming a keyhole K1, K2 having a smaller depth than the thickness of the workpiece 100 in the workpiece 100, and in the third spot P3, forming a keyhole K3 penetrating the workpiece 100 in the workpiece 100. That is, the above-described processing step is performed at laser output and processing speed that can form such keyholes K1 to K3.

According to the above-described embodiment, in each of the first spot P1 and the second spot P2, a keyhole K1, K2 having a smaller depth than the thickness of the workpiece 100 is formed in the workpiece 100, and in the third spot P3, a keyhole K3 penetrating the workpiece 100 is formed. Therefore, in processing including the step of forming a keyhole penetrating the workpiece 100 (for example, penetration welding), as described above, it is possible to improve processing speed while suppressing a decrease in processing quality.

### Examples

Using the laser processing apparatus 1 shown in FIG. 1, butt welding was performed between plate materials with a thickness of 6 mm according to the above-described processing step under the test conditions of Examples 1 to 9 shown in Table 1. Specifically, the first spot P1, the second spot P2, and the third spot P3 linearly arranged were formed with the laser processing apparatus 1, and plate materials (workpiece) were relatively moved with respect to the laser spots P1 to P3 so that the laser spots P1 to P3 pass through a processing target portion of the plate materials successively for butt welding between the plate materials. The definition of the test conditions shown in Table 1 are as follows.
Spot diameter ϕ (mm): diameters of first to third spots (ϕ = ϕ1 = ϕ2 = ϕ3)
Distance L between spots (mm): distance L₁₂ between the first spot and the second spot, and distance L₂₃ between the second spot and the third spot (L = L₁₂ = L₂₃)
Beam energy ratios E1 to E3 (%): ratio of energy in each of the first to third spots to the total amount (100%) of energy of laser beam in the first to third spots
Welding speed (m/min): relative speed of the plate material with respect to the laser spots P1 to P3 in the welding direction

After the welding was performed, welding quality (processing quality) was evaluated for each test example. The evaluation indexes of welding quality are as follows. Tables 1 to 3 show the evaluation results. (The test conditions for each test example shown in Tables 2 and 3 are the same as the test conditions shown in Table 1.)

Spatter: visually evaluated as "good" when the amount of spatter was small, and evaluated as "poor" when the amount of spatter was large.

Beads (for Examples 4, 5, 8, and 9; see Tables 2 and 3): evaluated as "good" when there was no underfill on one or both sides of the plate materials, and evaluated as "poor" when there was underfill.

**(Table 1)**

| No. | Spot diameter | Distance between spots | | Beam energy ratio | | | Total output | Welding speed | Weld quality |
|---|---|---|---|---|---|---|---|---|---|
| | *φ* mm | Lmm | L/ *φ* | E1% | E2% | E3% | kw | m/min | Spatter |
| Example1 | 2.1 | 1.6 | 0.8 | 13 | 70 | 17 | 15.5 | 3.5 | Poor |
| Example2 | 2.1 | 1.6 | 0.8 | 13 | 35 | 52 | 15.5 | 3.5 | Poor |
| Example3 | 2.1 | 1.6 | 0.8 | 28 | 20 | 52 | 15.5 | 3.5 | Good |
| Example4 | 2.1 | 1.6 | 0.8 | 28 | 20 | 52 | 20 | 5 | Good |
| Example5 | 0.33 | 1.08 | 3.3 | 25 | 20 | 55 | 10 | 7 | Good |
| Example6 | 0.33 | 1.08 | 3.3 | 41 | 28 | 31 | 10 | 7 | Poor |
| Example7 | 0.33 | 1.08 | 3.3 | 17 | 59 | 24 | 10 | 7 | Poor |
| Example8 | 0.2 | 0.75 | 3.8 | 28 | 22 | 50 | 10 | 7 | Good |
| Example9 | 0.47 | 1.08 | 2.3 | 25 | 20 | 55 | 10 | 7 | Good |

As can be seen from Table 1, in Examples 3 to 5, 8, and 9, where the beam energy ratio E1 was between 20% and 30%, E2 was between 20% and 30%, and E3 was between 45% and 55%, the amount of spatter generated was small and the welding quality was good at welding speeds of 3.5 m/min and above. In contrast, in Examples 1, 2, 6, and 7, where the beam energy ratios E1 to E3 were outside the above-described ranges, the amount of spatter generated was large and the welding quality was poor. This indicates that when the beam energy ratio E1 is not less than 20% and not more than 30%, E2 is not less than 20% and not more than 30%, and E3 is not less than 45% and not more than 55%, it is easier to suppress the generation of spatter and thus improve processing speed while suppressing a decrease in processing quality.

Then, as shown in Table 2, among Examples 4, 5, 8, and 9, where the evaluation results regarding "spatter" were determined to be good, in Example 5, where the spot diameter ϕ of the laser spot was within the range of not less than 0.25 mm and not more than 0.4 mm, no underfill occurred at a welding speed 7 m/min or more, and the welding quality was particularly good. That is, both high-speed processing and good processing quality were achieved.

In contrast, in Example 8, where the spot diameter ϕ was less than 0.25 mm, there was little spatter generation in high-speed processing (welding speed of 7 m/min), but underfill occurred. This is thought to be due to the fact that the small spot diameter ϕ did not provide the sufficient melting amount of base material necessary for processing the workpiece 100. In Example 9, where the spot diameter was more than 0.4 mm, there was little spatter in high-speed processing (welding speed of 7 m/min), but underfill occurred. This is thought to be due to the fact that the larger spot diameter facilitated the generation of spatter. In Example 4, where the spot diameter was more than 0.4 mm, underfill did not occur, but the processing speed remained at 5 m/min, which was not as good as in Example 5. This indicates that when the spot diameter ϕ is within the range of not less than 0.25 mm and not more than 0.4 mm, it is easier to both suppress a decrease in processing quality and improve processing speed.

**(Table 2)**

| No. | Spot diameter | Distance between spots | | Beam energy ratio | | | Total output | Welding speed | Weld quality | |
|---|---|---|---|---|---|---|---|---|---|---|
| | *φ* mm | Lmm | L/ *φ* | E1 % | E2% | E3% | kw | m/min | Spatter | Bead |
| Example4 | 2.1 | 1.6 | 0.8 | 28 | 20 | 52 | 20 | 5 | Good | Good |
| Examples | 0.33 | 1.08 | 3.3 | 25 | 20 | 55 | 10 | 7 | Good | Good |
| Examples | 0.2 | 0.75 | 3.8 | 28 | 22 | 50 | 10 | 7 | Good | Poor |
| Example9 | 0.47 | 1.08 | 2.3 | 25 | 20 | 55 | 10 | 7 | Good | Poor |

Then, as shown in Table 3, among Examples 5, 8, and 9, where the evaluation results regarding "spatter" were determined to be good, in Example 5, where the ratio L/ϕ of the distance L between the spots to the spot diameter ϕ of the laser spot was within the range of not less than 2.5 and not more than 3.5, no underfill occurred at a welding speed above 7 m/min, and the welding quality was particularly good. That is, both high-speed processing and good processing quality were achieved.

In contrast, in Examples 8 and 9, where the ratio L/ϕ was outside the above-described range, there was little spatter generation in high-speed processing (welding speed of 7 m/min), but underfill occurred. In Example 8, since the distance L between the spots was large relative to the spot diameter ϕ, the cooling between the spots was more likely to occur and the molten pool width could not be effectively widened, which may have caused insufficient volume of the molten pool, resulting in underfilling. In Example 9, since the distance L between the spots was small relative to the spot diameter ϕ, the molten pool between the keyholes became narrower and the keyholes were partially connected to each other. This may have pushed the molten pool out of the bottom side and reduced the melt, resulting in underfilling. This indicates that when the ratio ϕ/ϕ of the distance L between the spots to the spot diameter ϕ of the laser spot is within the range of not less than 2.5 and not more than 3.5, it is easier to both suppress a decrease in processing quality and improve processing speed.

**(Table 3)**

| No. | Spot diameter | Distance between spots | | Beam energy ratio | | | Total output | Welding speed | Weld quality | |
|---|---|---|---|---|---|---|---|---|---|---|
| | *φ* mm | Lmm | L/ *φ* | E1% | E2% | E3% | kw | m/min | Spatter | Bead |
| Examples | 0.33 | 1.08 | 3.3 | 25 | 20 | 55 | 10 | 7 | Good | Good |
| Examples | 0.2 | 0.75 | 3.8 | 28 | 22 | 50 | 10 | 7 | Good | Poor |
| Example 9 | 0.47 | 1.08 | 2.3 | 25 | 20 | 55 | 10 | 7 | Good | Poor |

Embodiments of the present invention were described in detail above, but the present invention is not limited thereto, and various amendments and modifications may be implemented as long as they fall within the scope of the present invention as defined in the appended claims.

### Reference Signs List

- 1: Laser processing apparatus
- 2: Laser oscillator
- 4: Optical fiber
- 6: Laser emission part
- 8: Collimating optics
- 10: Focusing optics
- 12: Laser splitting part
- 14A, 14B: Tilting prism
- 15: Polygonal prism
- 16A to 16D: Mirror
- 100: Workpiece
- 101: Molten pool
- 102: Processing target portion
- 103: Solid-liquid interface
- K1 to K3: Keyhole
- P1: First spot (Laser spot)
- P2: Second spot (Laser spot)
- P3: Third spot (Laser spot)

## Claims

1. A laser processing method, comprising a step of processing a workpiece (100) by relatively moving the workpiece (100) with respect to a plurality of laser spots including a first spot (P1), a second spot (P2), and a third spot (P3) which are linearly arranged so that the first spot (P1), the second spot (P2), and the third spot (P3) pass through a processing target portion of the workpiece (100) in this order,
**characterized in that** to a total amount of energy of laser beam in the first spot (P1), the second spot (P2), and the third spot,
a ratio of energy in the first spot (P1) is not less than 20% and not more than 30%,
a ratio of energy in the second spot (P2) is not less than 20% and not more than 30%, and
a ratio of energy in the third spot (P3) is not less than 45% and not more than 55%.

2. The laser processing method according to claim 1,
wherein the ratio of energy in the first spot (P1) is larger than the ratio of energy in the second spot (P2).

3. The laser processing method according to claim 1 or 2,
wherein a diameter of each of the first spot (P1), the second spot (P2), and the third spot (P3) is not less than 0.25 mm and not more than 0.4 mm.

4. The laser processing method according to any one of claims 1 to 3,
wherein a ratio L/ϕ_{avg} of a distance L between centers of two adjacent laser spots of the plurality of laser spots to an average spot diameter ϕ_{avg} of the two adjacent laser spots is not less than 2.5 and not more than 3.5.

5. The laser processing method according to any one of claims 1 to 4,
wherein a distance between centers of the first spot (P1) and the third spot (P2) is smaller than a thickness of the processing target portion of the workpiece (100).

6. The laser processing method according to any one of claims 1 to 5,
wherein the workpiece (100) includes a pair of plate materials, and
wherein the step of processing includes butt welding of the pair of plate materials.

7. The laser processing method according to any one of claims 1 to 6,
wherein the step of processing includes:
in each of the first spot (P1) and the second spot (P2), forming a keyhole (K1, K2) having a smaller depth than a thickness of the workpiece (100) in the workpiece (100); and
in the third spot (P3), forming a keyhole (K3) penetrating the workpiece (100) in the workpiece (100).

## Patentansprüche

1. Laserbearbeitungsverfahren, das einen Schritt des Bearbeitens eines Werkstücks (100) durch relatives Bewegen des Werkstücks (100) in Bezug auf eine Vielzahl von Laserspots umfasst, die einen ersten Spot (P1), einen zweiten Spot (P2) und einen dritten Spot (P3) umfasst, die auf einer Linie angeordnet sind, so dass der erste Spot (P1), der zweite Spot (P2) und der dritte Spot (P3) in dieser Reihenfolge durch einen Bearbeitungszielabschnitt des Werkstücks (100) laufen,
**dadurch gekennzeichnet, dass** bei einer Gesamtenergiemenge des Laserstrahls im ersten Spot (P1), im zweiten Spot (P2) und dem dritten Spot
ein Anteil der Energie im ersten Spot (P1) nicht weniger als 20 % und nicht mehr als 30 % beträgt,
ein Anteil der Energie im zweiten Spot (P2) nicht weniger als 20 % und nicht mehr als 30 % beträgt und
ein Anteil der Energie im dritten Spot (P3) nicht weniger als 45 % und nicht mehr als 55 % beträgt.

2. Laserbearbeitungsverfahren nach Anspruch 1,
wobei der Anteil der Energie im ersten Spot (P1) größer ist als der Anteil der Energie im zweiten Spot (P2).

3. Das Laserbearbeitungsverfahren nach Anspruch 1 oder 2,
bei dem ein Durchmesser jedes der ersten (P1), zweiten (P2) und dritten (P3) Spots nicht weniger als 0,25 mm und nicht mehr als 0,4 mm beträgt.

4. Das Laserbearbeitungsverfahren gemäß einem der Ansprüche 1 bis 3,
wobei ein Verhältnis L/ϕ_{avg} eines Abstands L zwischen den Mittelpunkten zweier benachbarter Laserspots der Vielzahl von Laserspots zu einem durchschnittlichen Spotdurchmesser ϕ_{avg} der beiden benachbarten Laserspots nicht weniger als 2,5 und nicht mehr als 3,5 beträgt.

5. Das Laserbearbeitungsverfahren gemäß einem der Ansprüche 1 bis 4,
bei dem ein Abstand zwischen den Mittelpunkten des ersten Spots (P1) und des dritten Spots (P2) kleiner ist als eine Dicke des zu bearbeitenden Zielabschnitts des Werkstücks (100).

6. Das Laserbearbeitungsverfahren gemäß einem der Ansprüche 1 bis 5,
wobei das Werkstück (100) ein Paar von Plattenmaterialien umfasst und
wobei der Bearbeitungsschritt das Stumpfschweißen des Paars von Plattenmaterialien umfasst.

7. Das Laserbearbeitungsverfahren gemäß einem der Ansprüche 1 bis 6,
wobei der Bearbeitungsschritt umfasst:
Ausbilden eines Schlüssellochs (K1, K2) mit einer geringeren Tiefe als eine Dicke des Werkstücks (100) in dem Werkstück (100) aufweist in jedem der ersten (P1) und zweiten (P2) Spots; und
Ausbilden eines Schlüssellochs (K3), das das Werkstück (100) in dem Werkstück (100) durchdringt, im dritten Spot (P3).

## Revendications

1. Procédé de traitement au laser, comprenant une étape de traitement d'une pièce à usiner (100) en déplaçant relativement la pièce à usiner (100) par rapport à une pluralité de spots laser incluant un premier spot (P1), un deuxième spot (P2), et un troisième spot (P3) qui sont agencés linéairement de telle façon que le premier spot (P1), le deuxième spot (P2), et le troisième spot (P3) passent à travers une partie cible de traitement de la pièce à usiner (100) dans cet ordre,
**caractérisé en ce que** pour une quantité totale d'énergie de faisceau laser dans le premier spot (P1), le deuxième spot (P2), et le troisième spot,
un rapport d'énergie dans le premier spot (P1) n'est pas inférieur à 20% et pas supérieur à 30%,
un rapport d'énergie dans le deuxième spot (P2) n'est pas inférieur à 20% et pas supérieur à 30%, et
un rapport d'énergie dans le troisième spot (P3) n'est pas inférieur à 45% et pas supérieur à 55%.

2. Procédé de traitement au laser selon la revendication 1,
dans lequel le rapport d'énergie dans le premier spot (P1) est plus grand que le rapport d'énergie dans le deuxième spot (P2).

3. Procédé de traitement au laser selon la revendication 1 ou 2,
dans lequel un diamètre de chacun du premier spot (P1), du deuxième spot (P2), et du troisième spot (P3) n'est pas inférieur à 0,25 mm et pas supérieur à 0,4 mm.

4. Procédé de traitement au laser selon l'une quelconque des revendications 1 à 3,
dans lequel un rapport L/ϕ_{avg} d'une distance L entre des centres de deux spots laser adjacents de la pluralité de spots laser sur un diamètre moyen de spot ϕ_{avg} des deux spots laser adjacents n'est pas inférieur à 2,5 et pas supérieur à 3,5.

5. Procédé de traitement au laser selon l'une quelconque des revendications 1 à 4,
dans lequel une distance entre des centres du premier spot (P1) et du troisième spot (P3) est plus petite qu'une épaisseur de la partie cible de traitement de la pièce à usiner (100).

6. Procédé de traitement au laser selon l'une quelconque des revendications 1 à 5,
dans lequel la pièce à usiner (100) inclut une paire de matériaux en plaque, et
dans lequel l'étape de traitement inclut un soudage en bout de la paire de matériaux en plaque.

7. Procédé de traitement au laser selon l'une quelconque des revendications 1 à 6,
dans lequel l'étape de traitement inclut :
dans chacun du premier spot (P1) et du deuxième spot (P2), la formation d'une entaille en trou de serrure (K1, K2) ayant une profondeur plus petite qu'une épaisseur de la pièce à usiner (100) dans la pièce à usiner (100), et
dans le troisième spot (P3), la formation d'une entaille en trou de serrure (K3) pénétrant la pièce à usiner (100) dans la pièce à usiner (100).
